# EUROPÄISCHE PATENTSCHRIFT

(11) **EP 3 236 295 B1**
(45) Veröffentlichungstag und Bekanntmachung des Hinweises auf die Patenterteilung: **14.07.2021**
(21) Anmeldenummer: 16165931.3
(22) Anmeldetag: 19.04.2016
(51) Int. Cl.: G01V 8/20

(54) **LICHTVORHANG**
LIGHT CURTAIN
RIDEAU LUMINEUX

(43) Veröffentlichungstag der Anmeldung: 25.10.2017
(73) Patentinhaber: Leuze electronic GmbH + Co KG, 73277 Owen/Teck (DE)
(72) Erfinder: Feller, Bernhard, 86316 Friedberg (DE)
(74) Vertreter: Ruckh, Rainer Gerhard

(56) Entgegenhaltungen:
- EP-A1- 2 410 354
- EP-A2- 0 834 726
- EP-A2- 2 444 825
- DE-A1- 19 852 412
- DE-T2- 69 310 977
- DE-U1- 20 212 769

## Beschreibung

Die Erfindung betrifft einen Lichtvorhang gemäß dem Oberbegriff des Anspruchs 1.

Derartige Lichtvorhänge, zu welchen allgemein Lichtgitter oder Lichtschrankenanordnungen gehören, dienen allgemein zur Erfassung von Objekten in einem Überwachungsbereich. Ein derartiger Lichtvorhang umfasst eine Anzahl von Lichtstrahlen emittierenden Sendern und eine Anzahl von den Sendern zugeordneten Empfängern. Weiterhin umfasst der Lichtvorhang eine Steuereinheit zur Ansteuerung der Sender und eine Auswerteeinheit, in welcher in Abhängigkeit von Empfangssignalen der Empfänger ein Objektfeststellungssignal generiert wird. Dabei erfolgt eine Detektion eines Objekts dadurch, dass eine Unterbrechung einer Strahlachse des Lichtvorhangs registriert wird, das heißt eine Unterbrechung des Strahlengangs der von einem Sender emittierten und auf einen zugeordneten Empfänger geführten Lichtstrahlen.

Ein derartiger Lichtvorhang ist aus DE 10 2012 110 636 A1 vorbekannt. Bei diesem Lichtvorhang emittieren die Sender kurze Sendelichtimpulse, wobei die Sender zyklisch einzeln nacheinander aktiviert sind. Zur Generierung der Sendelichtimpulse ist jedem Sender eine geregelte Stromquelle zugeordnet.

Damit kann der Betrieb jedes Senders über die ihm zugeordnete geregelte Stromquelle gesteuert, insbesondere geregelt werden, wobei die Regelung derart erfolgt, dass besonders kurze Sendelichtimpulse im Mikrosekundenbereich erzeugt werden, wobei die Sendeströme der Sender in einem weiteren Bereich variiert werden, um einen hohen Dynamikbereich des Lichtvorhangs zu erzielen.

Nachteilig hierbei ist, dass jedem Sender eine geregelte Stromquelle zugeordnet ist, was einen unerwünscht hohen konstruktiven Aufwand zur Durchführung der Regelvorgänge bedeutet.

Die EP 2 410 354 A1 betrifft ein Verfahren zum Betreiben eines Sicherheitslichtgitters mit den Schritten:
- Aussenden von Lichtstrahlen von Lichtsendern einer ersten und/oder zweiten optischen Einheit,
- Empfangen der Lichtstrahlen mit Lichtempfängern der zweiten und/oder ersten optischen Einheit und Erzeugen von Empfangssignalen, wobei jeweils ein Lichtsender einem Lichtempfänger gegenüberliegend zugeordnet ist, so dass die Lichtstrahlen solch gebildeter Paare von Lichtsendern und Lichtempfängern ein Schutzfeld bilden,
- Auswerten der Empfangssignale der Lichtempfänger,
- Erzeugen eines Sicherheitssignals bei unzulässigem Objekteingriff in das Schutzfeld,
- Ansteuern der Lichtsender und/oder Verstärken der Empfangssignale der Lichtempfänger, so dass alle verstärkten Empfangssignale bei freiem Schutzfeld im nicht gesättigten Bereich der Empfangselektronik liegen,
- Auswerten der Amplituden aller verstärkten Empfangssignale
- und Ausgeben des Sicherheitssignals, wenn durch einen unzulässigen Objekteingriff wenigstens eine der Amplituden in einem bestimmten Bereich liegt.

Der Erfindung liegt die Aufgabe zugrunde einen Lichtvorhang bereitzustellen, welcher bei geringem konstruktivem Aufwand eine hohe Funktionalität aufweist.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft einen Lichtvorhang mit einer Anzahl von Lichtstrahlen emittierenden Sendern und einer Anzahl von den Sendern zugeordneten Empfängern. Weiterhin umfasst der Lichtvorhang eine Steuereinheit zur Ansteuerung der Sender und eine Auswerteeinheit, in welcher in Abhängigkeit von Empfangssignalen der Empfänger ein Objektfeststellungssignal generiert wird. Die Steuereinheit umfasst eine Regeleinheit, mittels derer die Sender individuell geregelt sind. In der Steuereinheit ist eine Speichereinheit vorgesehen, in welcher Sollwerte für die Schaltströme der Sender gespeichert sind. In der Speichereinheit für die Sollwerte sind temperaturabhängige, betriebsabhängige und/oder chargenabhängige Korrekturtabellen für die Sollwerte hinterlegt.

Der Grundgedanke der Erfindung besteht somit darin, dass nur eine Regeleinheit zur Regelung aller Sender des Lichtvorhangs vorgesehen ist. Damit kann der konstruktive Aufwand im Vergleich zu Lichtvorhängen, bei denen den Sendern des Lichtvorhangs jeweils eine separate Regeleinheit zugeordnet ist, signifikant reduziert werden.

Ein wesentlicher Aspekt der Erfindung besteht darin, dass mit der Regeleinheit die einzelnen Sender individuell, das heißt unabhängig voneinander und gegebenenfalls auf unterschiedliche Weise mit der Regeleinheit geregelt werden. Damit kann der Betrieb der Sender individuell optimiert werden. Insbesondere kann diese Optimierung derart erfolgen, dass die Sender unabhängig von Bauteiletoleranzen, Alterungsprozessen oder extremen Umwelteinflüssen gleichartige, vorzugsweise identische Lichtleistungen liefern. Damit ist gewährleistet, dass für alle Sender und deren zugeordnete Empfänger das gleiche Detektionsverhalten erzielt wird, so dass eine gleichförmige Nachweisempfindlichkeit für alle Strahlachsen des Lichtvorhangs erhalten wird.

Die erfindungsgemäße Regelung von Sendern kann dabei für Lichtvorhänge aller Art, das heißt beliebige Sender-Empfängeranordnungen erfolgen. Insbesondere umfasst der Begriff Lichtvorhang auch Lichtgitter und Lichtschrankenanordnungen beliebiger Bauart.

Gemäß einer vorteilhaften Ausführungsform der Erfindung weist der Lichtvorhang mehrere in einem Pulsbetrieb betriebene Sender auf, welche einzeln nacheinander von der Regeleinheit geregelt sind.

Die einzelnen Sender senden somit in den Sendepausen der anderen Sender Sendelichtpulse aus, deren Lichtleistung über die Regeleinheit eingestellt wird. Die Einzel-Aktivierung der Sender kann dabei durch die Steuereinheit in beliebigen, gegebenenfalls auch zeitlich variierenden Reihenfolgen erfolgen.

Gemäß einer besonders zweckmäßigen Ausgestaltung sind zur Einzelansteuerung der Sender mit der Regeleinheit von der Steuereinheit gesteuerte Schaltmittel vorgesehen.

Mit diesen Schaltmittel wird auf besonders einfache Weise ein Multiplexbetrieb der Sender ermöglicht.

Gemäß einer ersten Alternative sind die Schaltmittel von Schaltern gebildet.

Dabei können die Schalter vorteilhaft Bestandteil der Steuereinheit sein, wodurch der konstruktive Aufwand für die Schalter gering gehalten werden kann.

Gemäß einer zweiten Alternative sind die Schaltmittel Bestandteil der Software der Steuereinheit.

In diesem Fall ist zur Ausbildung der Schaltmittel keinerlei zusätzlicher Hardwareaufwand erforderlich.

Gemäß einer vorteilhaften Ausgestaltung weist die Regeleinheit einen Regler und ein von diesem angesteuertes strombeeinflussendes Element, mittels dessen der Schaltstrom eines Senders vorgegeben wird, auf.

Der Regler kann beispielsweise von einem PI-Regler gebildet sein. Als strombeeinflussendes Element kann eine Strom- oder Spannungsquelle vorgesehen sein.

Weiterhin weist die Regeleinheit Mittel zur Messung des Istwerts des Schaltstroms eines Senders auf.

Mit der so ausgebildeten Regeleinheit lassen sich die erforderlichen Regelvorgänge bei geringem Aufwand exakt und reproduzierbar durchführen.

Die Regelvorgänge können dabei derart erfasst werden, dass die Einregelung der Schaltströme der Sender unmittelbar in Abhängigkeit der erfassten Istwerte für diese Schaltströme erfolgt.

Alternativ sind Mittel zur Filterung oder Mittelung des Istwerts vorgesehen.

Diese Vorgehensweise ist insbesondere dann vorteilhaft, wenn mit der Regeleinheit langsame Regelvorgänge durchgeführt werden, beispielsweise um ein Driften der Arbeitspunkte der Sender auszugleichen. Die Istwerte der Schaltströme können dann durch die Filterungen oder Mittelungen von kurzfristigen Schwankungen befreit werden.

Erfindungsgemäß ist in der Steuereinheit eine Speichereinheit vorgesehen, in welcher Sollwerte für die Schaltströme der Sender gespeichert sind.

Dabei werden zweckmäßig die Sollwerte durch einen Einlernvorgang im Fertigungsprozess des Lichtvorhangs bestimmt.

Damit können fertigungsspezifische Eigenschaften von Bauteilen, insbesondere der Sender, in dem Einlernvorgang erfasst werden, um damit die Sollwerte geeignet zu wählen, insbesondere um fertigungsbedingte Schwankungen einzelner Sender auszugleichen, um so für alle Strahlachsen des Lichtvorhangs reproduzierbar dasselbe Detektionsverhalten zu erzielen.

Erfindungsgemäß sind in der Speichereinheit für die Sollwerte temperaturabhängige, betriebsdauerabhängige und/oder chargenabhängige Korrekturtabellen für die Sollwerte hinterlegt.

Mit diesen Korrekturtabellen können Schwankungen von Bauteileigenschaften aufgrund von Alterungseffekten, externen Einflüssen wie Temperaturschwankungen oder auch chargenabhängige Unterschiede von Bauteilen exakt erfasst werden, um dann durch diese Effekte bedingte Beeinträchtigungen der Lichtleistungen der Sender mit den Regelvorgängen der Regeleinheit gezielt auszugleichen.

Damit können insbesondere langzeitstabil die Lichtleistungen aller Sender auf denselben Wert geregelt werden.

Da die hierfür erforderlichen Regelvorgänge lediglich Driften von Bauteilen ausgleichen müssen, können diese Regelvorgänge sehr langsam sein, das heißt es ist nur eine geringe Regeldynamik erforderlich.

Gemäß einer ersten Ausbildung des Lichtvorhangs sind die Sender einerseits und die Empfänger andererseits in räumlich getrennten Einheiten angeordnet.

In diesem Fall sind die Sender des Lichtvorhangs insbesondere in einem gemeinsamen ersten Gehäuse an einem ersten Rand eines Überwachungsbereichs und die Empfänger des Lichtvorhangs insbesondere in einem gemeinsamen zweiten Gehäuse an einem zweiten Rand eines Überwachungsbereichs angeordnet, so dass bei freiem Überwachungsbereich die von einem Sender emittierten Lichtstrahlen den Überwachungsbereich durchsetzen und dann auf einen oder mehrere zugeordnete Empfänger treffen. Der Lichtvorhang arbeitet somit nach dem Prinzip einer Einweglichtschranke.

Gemäß einer zweiten Ausbildung des Lichtvorhangs sind Sender und diesem zugeordnete Empfänger in einer Einheit integriert.

Insbesondere können alle Sender und Empfänger in einem Gehäuse an einem ersten Rand des Überwachungsbereichs angeordnet sein. Dann befindet sich am gegenüberliegenden Rand des Überwachungsbereichs als weiterer Bestandteil des Lichtvorhangs ein Reflektor, insbesondere ein Retroreflektor. In diesem Fall arbeitet der Lichtvorhang nach dem Prinzip einer Reflexionslichtschranke. Bei freiem Überwachungsbereich werden die von einem Sender emittierten Lichtstrahlen durch den Überwachungsbereich zum Reflektor geführt. Dort werden die Lichtstrahlen reflektiert und werden ein zweites Mal durch den Überwachungsbereich geführt und gelangen dann zu dem oder den dem Sender zugeordneten Empfängern.

Da in diesem Fall der Sender und der oder die diesem zugeordneten Empfänger in einem Gehäuse integriert sind, stehen die Empfangssignale dieser Empfänger für die Durchführung der Regelvorgänge für den jeweiligen Sender zur Verfügung. Somit kann die Regelung eines Senders in Abhängigkeit des in dem zugeordneten Empfänger empfangenen Empfangslichts erfolgen.

In diesem Fall können die Regelvorgänge vorteilhaft so durchgeführt werden, dass bei freiem Überwachungsbereich für alle Empfänger dieselbe Empfangsleistung erhalten wird.

Die Erfindung wird im Folgenden anhand der Zeichnungen erläutert. Es zeigen:
- Figur 1:: Schematische Darstellung eines Ausführungsbeispiels des erfindungsgemäßen Lichtvorhangs.
- Figur 2:: Detaildarstellung der Steuereinheit mit zugeordneten Sendern des Lichtvorhangs gemäß Figur 1.

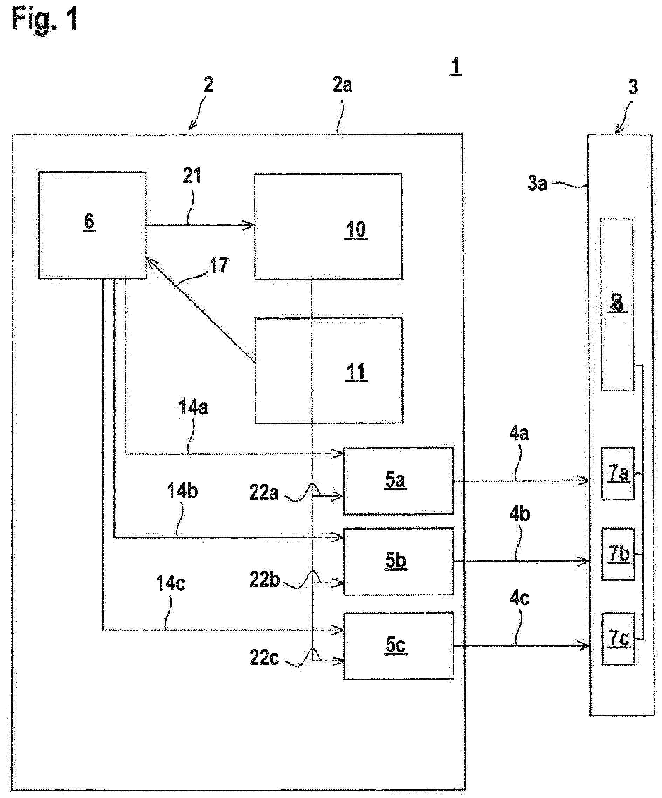

Figur 1 zeigt den Aufbau eines Ausführungsbeispiels eines Lichtvorhangs 1 zur Erfassung von Objekten in einem Überwachungsbereich. Der Lichtvorhang 1 umfasst eine Sendereinheit 2 an einem ersten Rand des Überwachungsbereichs und eine Empfängereinheit 3 an einem gegenüberliegenden zweiten Rand des Überwachungsbereichs. Die Komponenten der Sendereinheit 2 sind in einem ersten Gehäuse 2a angeordnet. Die Komponenten der Empfängereinheit 3 sind in einem zweiten Gehäuse 3a angeordnet.

Die Sendereinheit 2 weist eine Anordnung von Lichtstrahlen 4a, 4b, 4c emittierenden Sendern 5a, 5b, 5c auf, die von einer Steuereinheit 6 gesteuert sind. Die Sender 5a, 5b, 5c sind von Laserdioden oder Leuchtdioden gebildet, wobei diese Lichtstrahlen 4a, 4b, 4c in Form von Sendelichtpulsen emittieren. Die Steuereinheit 6 besteht aus einem Mikroprozessor oder dergleichen.

Die Empfängereinheit 3 weist eine Anordnung von Lichtstrahlen 4a, 4b, 4c empfangenden Empfängern 7a, 7b, 7c auf, die an eine Auswerteeinheit 8 angeschlossen sind. Die Empfänger 7a, 7b, 7c sind von Photodioden gebildet. Die Auswerteeinheit 8 besteht aus einem Mikroprozessor oder dergleichen. In der Auswerteeinheit 8 wird in Abhängigkeit der von den Empfängern 7a, 7b, 7c generierten Empfangssignale ein Objektfeststellungssignal generiert. Das Objektfeststellungssignal kann insbesondere als binäres Schaltsignal ausgebildet sein, dessen Schaltzustände angeben, ob sich ein Objekt im Überwachungsbereich befindet oder nicht.

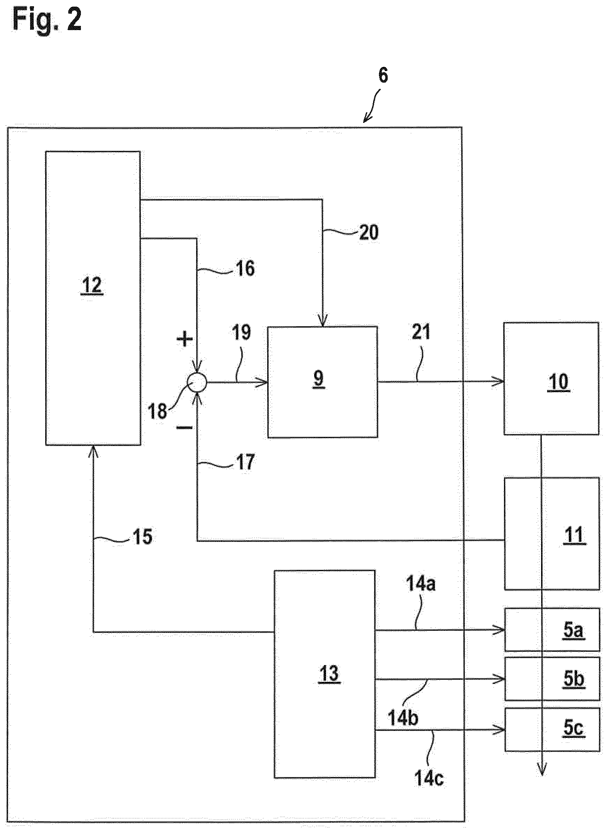

Bei dem Ausführungsbeispiel von Figur 2 sind drei Sender 5a, 5b, 5c und drei Empfänger 7a, 7b, 7c vorgesehen, wobei jeweils ein Sender 5a, 5b, 5c einem Empfänger 7a, 7b, 7c so zugeordnet ist, dass bei freiem Überwachungsbereich die Lichtstrahlen 4a, 4b, 4c dieses Senders 5a, 5b, 5c nur auf dessen zugeordneten Empfänger 7a, 7b, 7c treffen. Der Sender 5a, 5b, 5c und der zugeordnete Empfänger 7a, 7b, 7c bilden eine Strahlachse des Lichtvorhangs 1. Generell kann der Lichtvorhang 1 auch mehr oder weniger als drei Strahlachsen aufweisen, wobei prinzipiell auch nur eine Strahlachse möglich ist.

Die Sender 5a, 5b, 5c werden an der Steuereinheit 6 zyklisch einzeln nacheinander aktiviert. Die Empfänger 7a, 7b, 7c können dauerhaft aktiviert sein. Vorteilhaft können auch die Empfänger 7a, 7b, 7c über die Auswerteeinheit 8 zyklisch einzeln aktiviert sein. Dann erfolgt in bekannter Weise über die Lichtstrahlen 4a, 4b, 4c eine optische Synchronisierung derart, dass immer bei Aktivierung eines Senders 5a, 5b, 5c nur der zugehörige Empfänger 7a, 7b, 7c aktiviert ist.

Ein in den Überwachungsbereich eindringendes Objekt wird durch die Unterbrechung der Lichtstrahlen 4a, 4b, 4c einer oder mehrerer Strahlachsen erfasst. Bei einer Unterbrechung einer Strahlachse gelangt nur noch eine verminderte Lichtmenge zum zugeordneten Empfänger 7a, 7b, 7c, was durch eine Schwellwertbewertung der Empfangssignale dieses Empfängers 7a, 7b, 7c in der Auswerteeinheit 8 festgestellt wird.

Der Aufbau der Steuereinheit 6 mit den einzelnen Sendern 5a, 5b, 5c ist in Figur 2 detailliert dargestellt. Wie aus den Figuren 1 und 2 ersichtlich, bildet die Steuereinheit 6 eine Regeleinheit aus, wobei mit dieser Regeleinheit alle Sender 5a, 5b, 5c des Lichtvorhangs 1 geregelt werden. Die Regeleinheit umfasst einen Regler 9, insbesondere einen PI-Regler, ein strombeeinflussendes Element 10, insbesondere eine Strom- oder Spannungsquelle, mit dem der Schaltstrom eines Senders 5a, 5b, 5c vorgegeben wird, sowie eine Messeinrichtung 11 zum Messen des Istwerts eines Schaltstroms eines Senders 5a, 5b, 5c. Die mit der Messeinrichtung 11 bestimmten Istwerte der Schaltströme der Sender 5a, 5b, 5c können unmittelbar oder erst nach einer Filterung oder Mittelung über einen bestimmten Zeitraum für die Regelung verwendet werden. Weiterhin ist eine Speichereinheit 12 für die Speicherung von Sollwerten für die Regelung vorgesehen.

Den Sollwerten sind temperaturabhängige, betriebsdauerabhängige und/oder chargenabhängige Korrekturtabellen zugeordnet. Mit diesen Korrekturtabellen können die Sollwerte abhängig von der jeweiligen Temperatur, abhängig von betriebsdauerbedingten Änderungen der Sender 5a, 5b, 5c, beispielsweise aufgrund von Alterungsprozessen, beziehungsweise abhängig von Exemplarsteuerungen der Sender 5a, 5b, 5c modifiziert werden. Die Sollwerte und die Korrekturtabellen werden vorteilhaft in einem Einlernvorgang während des Fertigungsprozesses des Lichtvorhangs 1 bestimmt und dann in der Speichereinheit 12 hinterlegt.

Über die Steuereinheit 6 wird die Regeleinheit den einzelnen Sendern 5a, 5b, 5c in einem Multiplexbetrieb zugeschaltet, so dass mit dieser einen Regeleinheit der Schaltstrom jedes Senders 5a, 5b, 5c auf einen Sollwert geregelt ist, wenn dieser Sender 5a, 5b, 5c seine Sendelichtpulse aussendet.

Zur Durchführung des Multiplexbetriebs weist die Steuereinheit 6 Schaltmittel 13 auf, mittels derer die Regeleinheit selektiv den einzelnen Sendern 5a, 5b, 5c zugeschaltet wird und auch die Sender 5a, 5b, 5c aktiviert werden. Die Schaltmittel 13 sind im vorliegenden Fall Bestandteil der Software der Steuereinheit 6. Alternativ können die Schaltmittel 13 auch von Schaltern gebildet sein, die von der Steuereinheit 6 gesteuert werden.

Anhand der Figuren 1 und 2 wird im Folgenden die Funktionsweise des erfindungsgemäßen Lichtvorhangs 1 erläutert.

Die Steuereinheit 6 aktiviert einzeln nacheinander über die Schaltmittel 13 die einzelnen Sender und 5a, 5b, 5c und schaltet diesen die Regeleinheit zu, so dass für jeden aktivierten Sender 5a, 5b, 5c dessen Betrieb mit der Regeleinheit geregelt ist.

Zur Aktivierung der Sender 5a, 5b, 5c werden diese einzeln mit Schaltsignalen angesteuert, welche von den Schaltmitteln 13 über Leitungen 14a, 14b, 14c an die Sender 5a, 5b, 5c ausgegeben werden.

Über einen Signalpfad 15 wird die Nummer des aktivierten Senders 5a, 5b, 5c an die Speichereinheit 12 weitergegeben. Anhand der Nummer des Senders 5a, 5b, 5c erfolgt die Auswahl der für diesen hinterlegten Sollwerte und Korrekturtabellen, die in der Speichereinheit 12 gespeichert sind, so dass diese für die Regelung dieses Senders 5a, 5b, 5c mit der Regeleinheit verwendet werden.

Mit der Regelung wird der Schaltstrom des ausgewählten Senders 5a, 5b, 5c auf den ausgelesenen Sollwert (gegebenenfalls korrigiert durch Werte der Korrekturtabelle) geregelt. Hierzu werden der Sollwert über einen Signalpfad 16 und der mit der Messeinrichtung 11 bestimmte Istwert des Schaltstroms über den Signalpfad 17 einer Vergleichseinheit 18 zugeführt, in der aus der Differenz von Sollwert und Istwert die aktuelle Regelabweichung bestimmt wird, die dann dem Regler 9 zugeführt wird (Signalpfad 19).

Im Regler 9 wird anhand der Regelabweichung und eines Regelparameters eine Stellgröße für den Schaltstrom des Senders 5a, 5b, 5c gebildet. Im vorliegenden Fall ist der Regler 9 ein PI-Regler, dessen I-Anteil als Regelparameter in der Speichereinheit 12 gespeichert ist und über den Signalpfad 20 dem Regler 9 zugeführt ist.

Die Stellgröße wird an das strombeeinflussende Element 10 ausgegeben (Signalpfad 21). Das strombeeinflussende Element 10, das über Leitungen 22a, 22b, 22c mit den Sendern 5a, 5b, 5c verbunden ist, steuert dann den zu regelnden Sender 5a, 5b, 5c mit dieser Stellgröße an.

Dadurch werden zeitlich nacheinander alle Sender 5a, 5b, 5c des Lichtvorhangs 1 individuell mit der Regeleinheit geregelt.

Die Regelung erfolgt dabei vorteilhaft derart, dass alle Sender 5a, 5b, 5c dieselben Lichtleistungen abgeben. Durch die in der Speichereinheit 12 für die Sender 5a, 5b, 5c individuell hinterlegten Sollwerte und Korrekturtabellen können dabei bauteilbedingte und alterungsbedingte Bauteilschwankungen ausgeglichen werden. Auch auf die Sender 5a, 5b, 5c einwirkende Temperatureinflüsse können auf diese Weise ausgeglichen werden.

### Bezugszeichenliste

- (1): Lichtvorhang
- (2): Sendereinheit
- (2a): Gehäuse
- (3): Empfängereinheit
- (3a): Gehäuse
- (4a, 4b, 4c): Lichtstrahlen
- (5a, 5b, 5c): Sender
- (6): Steuereinheit
- (7a, 7b, 7c): Empfänger
- (8): Auswerteeinheit
- (9): Regler
- (10): strombeeinflussendes Element
- (11): Messeinrichtung
- (12): Speichereinheit
- (13): Schaltmittel
- (14a, 14b, 14c): Leitung
- (15): Signalpfad
- (16): Signalpfad
- (17): Signalpfad
- (18): Vergleichseinheit
- (19): Signalpfad
- (20): Signalpfad
- (21): Signalpfad
- (22a, 22b, 22c): Leitung

## Patentansprüche

1. Lichtvorhang (1) mit einer Anzahl von Lichtstrahlen (4a, 4b, 4c) emittierenden Sendern (5a, 5b, 5c) und einer Anzahl von den Sendern (5a, 5b, 5c) zugeordneten Empfängern (7a, 7b, 7c), mit einer Steuereinheit (6) zur Ansteuerung der Sender (5a, 5b, 5c) und mit einer Auswerteeinheit (8), in welcher in Abhängigkeit von Empfangssignalen der Empfänger (7a, 7b, 7c) ein Objektfeststellungssignal generiert wird, wobei die Steuereinheit (6) eine Regeleinheit umfasst, mittels derer die Sender (5a, 5b, 5c) individuell geregelt sind, **dadurch gekennzeichnet, dass** in der Steuereinheit (6) eine Speichereinheit (12) vorgesehen ist, in welcher Sollwerte für die Schaltströme der Sender (5a, 5b, 5c) gespeichert sind, wobei in der Speichereinheit (12) für die Sollwerte temperaturabhängige, betriebsdauerabhängige und/oder chargenabhängie Korrekturtabellen für die Sollwerte hinterlegt sind.

2. Lichtvorhang nach Anspruch 1, **dadurch gekennzeichnet, dass** dieser mehrere in einem Pulsbetrieb betriebene Sender (5a, 5b, 5c) aufweist, welche einzeln nacheinander von der Regeleinheit geregelt sind.

3. Lichtvorhang nach Anspruch 2, **dadurch gekennzeichnet, dass** zur Einzelansteuerung der Sender (5a, 5b, 5c) mit der Regeleinheit von der Steuereinheit (6) gesteuerte Schaltmittel (13) vorgesehen sind.

4. Lichtvorhang nach Anspruch 3, **dadurch gekennzeichnet, dass** die Schaltmittel (13) Bestandteil der Software der Steuereinheit (6) sind.

5. Lichtvorhang nach Anspruch 3, **dadurch gekennzeichnet, dass** die Schaltmittel (13) von Schaltern gebildet sind.

6. Lichtvorhang nach einem der Ansprüche 2 bis 5, **dadurch gekennzeichnet, dass** in der Steuereinheit (6) die Reihenfolge der mit der Regeleinheit angesteuerten Sender (5a, 5b, 5c) vorgebbar ist.

7. Lichtvorhang nach einem der Ansprüche 1 bis 6, **dadurch gekennzeichnet, dass** die Regeleinheit einen Regler (9) und ein von diesem angesteuertes strombeeinflussendes Element (10), mittels dessen der Schaltstrom eines Senders (5a, 5b, 5c) vorgegeben wird, aufweist.

8. Lichtvorhang nach Anspruch 7, **dadurch gekennzeichnet, dass** die Regeleinheit Mittel zur Messung des Istwerts des Schaltstroms eines Senders (5a, 5b, 5c) aufweist.

9. Lichtvorhang nach Anspruch 8, **dadurch gekennzeichnet, dass** Mittel zur Filterung oder Mittelung des Istwerts vorgesehen sind.

10. Lichtvorhang nach einem der Ansprüche 1 bis 9, **dadurch gekennzeichnet, dass** die Sollwerte durch einen Einlernvorgang im Fertigungsprozess des Lichtvorhangs (1) bestimmt sind.

11. Lichtvorhang nach einem der Ansprüche 1 bis 10, **dadurch gekennzeichnet, dass** die Sender (5a, 5b, 5c) einerseits und die Empfänger (7a, 7b, 7c) andererseits in räumlich getrennten Einheiten angeordnet sind.

12. Lichtvorhang nach einem der Ansprüche 1 bis 11, **dadurch gekennzeichnet, dass** Sender (5a, 5b, 5c) und diesem zugeordnete Empfänger (7a, 7b, 7c) in einer Einheit integriert sind.

13. Lichtvorhang nach Anspruch 12, **dadurch gekennzeichnet, dass** die Regelung eines Senders (5a, 5b, 5c) in Abhängigkeit des in dem zugeordneten Empfänger (7a, 7b, 7c) empfangenen Empfangslichts erfolgt.

## Claims

1. A light curtain (1) with a number of transmitters (5a, 5b, 5c) emitting light beams (4a, 4b, 4c) and a number of receivers (7a, 7b, 7c) associated with the transmitters (5a, 5b, 5c), with a control unit (6) for controlling the transmitters (5a, 5b, 5c) and with an evaluation unit (8) in which an object detection signal is generated as a function of reception signals of the receivers (7a, 7b, 7c), 5b, 5c) and having an evaluation unit (8) in which an object detection signal is generated as a function of received signals from the receivers (7a, 7b, 7c), the control unit (6) comprising a regulating unit by means of which the transmitters (5a, 5b, 5c) are individually controlled, **characterized in that** a memory unit (12) is provided in the control unit (6), in which memory unit (12) setpoint values for the switching currents of the transmitters (5a, 5b, 5c) are stored, temperature-dependent, operating duration-dependent and/or batch-dependent correction tables for the setpoint values being stored in the memory unit (12) for the setpoint values.

2. The light curtain according to claim 1, **characterised in that** it comprises a plurality of transmitters (5a, 5b, 5c) operated in a pulsed mode, which are individually controlled in succession by the control unit.

3. The light curtain according to claim 2, **characterised in that** switching means (13) controlled by the control unit (6) are provided for individual control of the transmitters (5a, 5b, 5c) with the control unit.

4. The light curtain according to claim 3, **characterised in that** the switching means (13) are part of the software of the control unit (6).

5. The light curtain according to claim 3, **characterised in that** the switching means (13) are formed by switches.

6. The light curtain according to one of claims 2 to 5, **characterised in that** the sequence of the transmitters (5a, 5b, 5c) controlled by the control unit can be predetermined in the control unit (6).

7. The light curtain according to one of the claims 1 to 6, **characterised in that** the control unit comprises a controller (9) and a current-influencing element (10) which is controlled by the controller and by means of which the switching current of a transmitter (5a, 5b, 5c) is predetermined.

8. The light curtain according to claim 7, **characterised in that** the control unit comprises means for measuring the actual value of the switching current of a transmitter (5a, 5b, 5c).

9. The light curtain according to claim 8, **characterised in that** means are provided for filtering or averaging the actual value.

10. The light curtain according to one of the claims 1 to 9, **characterised in that** the set values are determined by a sieving process in the manufacturing process of the light curtain (1).

11. The light curtain according to one of claims 1 to 10, **characterised in that** the transmitters (5a, 5b, 5c) on the one hand and the receivers (7a, 7b, 7c) on the other hand are arranged in spatially separate units.

12. The light curtain according to one of claims 1 to 11, **characterised in that** transmitter (5a, 5b, 5c) and receiver (7a, 7b, 7c) associated therewith are integrated in one unit.

13. The light curtain according to claim 12, **characterised in that** the control of a transmitter (5a, 5b, 5c) takes place in dependence on the received light received in the associated receiver (7a, 7b, 7c).

## Revendications

1. Rideau lumineux (1) avec plusieurs émetteurs (5a, 5b, 5c) émettant des rayons lumineux (4a, 4b, 4c) et plusieurs récepteurs (7a, 7b, 7c) associés aux émetteurs (5a, 5b, 5c), avec une unité de commande (6) pour commander les émetteurs (5a, 5b, 5c) et avec une unité d'évaluation (8) dans laquelle un signal de détection d'objet est généré en fonction des signaux de réception des récepteurs (7a, 7b, 7c), 5b, 5c) et avec une unité d'évaluation (8) dans laquelle un signal de détection d'objet est généré en fonction des signaux de réception des récepteurs (7a, 7b, 7c), l'unité de commande (6) comprenant une unité de régulation au moyen de laquelle les émetteurs (5a, 5b, 5c) sont commandés individuellement, **caractérisée en ce que** l'unité de commande (6) comporte une unité de mémoire (12) dans laquelle sont mémorisées des valeurs de consigne pour les courants de commutation des émetteurs (5a, 5b, 5c), des tableaux de correction dépendant de la température, de la durée de fonctionnement et/ou du lot étant mémorisés dans l'-unité de mémoire (12) pour les valeurs de consigne.

2. Rideau lumineux selon la revendication 1, **caractérisé en ce qu'**il comprend une pluralité d'émetteurs (5a, 5b, 5c) fonctionnant en mode pulsé, qui sont commandés individuellement et successivement par l'unité de commande.

3. Rideau lumineux selon la revendication 2, **caractérisé en ce que** des moyens de commutation (13) commandés par l'unité de commande (6) sont prévus pour la commande individuelle des émetteurs (5a, 5b, 5c) avec l'unité de commande.

4. Rideau lumineux selon la revendication 3, **caractérisé en ce que** les moyens de commutation (13) font partie du logiciel de l'unité de commande (6).

5. Rideau lumineux selon la revendication 3, **caractérisé en ce que** les moyens de commutation (13) sont formés par des interrupteurs.

6. Rideau lumineux selon l'une des revendications 2 à 5, **caractérisé en ce que** la séquence des émetteurs (5a, 5b, 5c) commandés par l'unité de commande peut être prédéterminée dans l'unité de commande (6).

7. Rideau lumineux selon l'une des revendications 1 à 6, **caractérisé en ce que** l'unité de commande comprend un contrôleur (9) et un élément influençant le courant (10) qui est commandé par le contrôleur et au moyen duquel le courant de commutation d'un émetteur (5a, 5b, 5c) est prédéterminé.

8. Rideau lumineux selon la revendication 7, **caractérisé en ce que** l'unité de commande comprend des moyens pour mesurer la valeur réelle du courant de commutation d'un émetteur (5a, 5b, 5c).

9. Rideau lumineux selon la revendication 8, **caractérisé en ce que** des moyens sont prévus pour filtrer ou calculer la moyenne de la valeur réelle.

10. Rideau lumineux selon l'une des revendications 1 à 9, **caractérisé en ce que** les valeurs de consigne sont déterminées par un processus de tamisage dans le processus de fabrication du rideau lumineux (1).

11. Rideau lumineux selon l'une des revendications 1 à 10, **caractérisé en ce que** les émetteurs (5a, 5b, 5c) d'une part et les récepteurs (7a, 7b, 7c) d'autre part sont disposés en unités spatialement séparées.

12. Rideau lumineux selon l'une des revendications 1 à 11, **caractérisé en ce que** l'émetteur (5a, 5b, 5c) et le récepteur (7a, 7b, 7c) qui lui est associé sont intégrés en une seule unité.

13. Rideau lumineux selon la revendication 12, **caractérisé en ce que** la commande d'un émetteur (5a, 5b, 5c) a lieu en fonction de la lumière reçue dans le récepteur associé (7a, 7b, 7c).
